# EUROPÄISCHE PATENTSCHRIFT

(11) **EP 3 914 838 B1**
(45) Veröffentlichungstag und Bekanntmachung des Hinweises auf die Patenterteilung: **16.10.2024**
(21) Anmeldenummer: 20701134.7
(22) Anmeldetag: 13.01.2020
(51) Int. Cl.: F16H 57/00, F16H 1/12, F16H 55/14, F16H 57/02, H02K 7/116

(54) **GETRIEBEMOTOR**
GEARED MOTOR
MOTORÉDUCTEUR

(30) Priorität: 21.01.2019 DE 102019000329
(43) Veröffentlichungstag der Anmeldung: 01.12.2021
(73) Patentinhaber: SEW-EURODRIVE GmbH & Co. KG, 76646 Bruchsal (DE)
(72) Erfinder: HERBERGER, Michael, Josef, 68789 St. Leon-Rot (DE)
(86) Internationale Anmeldenummer: PCT/EP2020/025007
(87) Internationale Veröffentlichungsnummer: WO 2020/151911

(56) Entgegenhaltungen:
- EP-A1- 3 165 796
- EP-A1- 3 208 493
- WO-A1-01/71220
- WO-A1-2007/089039
- DE-A1- 10 057 836
- JP-A- 2005 233 055

## Beschreibung

Die Erfindung betrifft einen Getriebemotor.

Es ist allgemein bekannt, dass ein Getriebemotor einen Motor aufweist, der ein Getriebe antreibt, das mindestens eine Getriebestufe aufweist.

Aus der DE 100 57 836 A1 ist ein Antrieb für Klappen in gasführenden Röhren von Verbrennungsmotoren bekannt.

Aus der DE 10 2009 005 344 A1 ist ein Getriebemotor bekannt.

Aus der DE 103 12 941 A1 ist ein Bausatz für eine Baureihe von Getriebemotoren bekannt.

Aus der DE 101 03 090 A1 ist eine Antriebseinheit für Tore bekannt.

Aus der US 2014 / 0 260 726 A1 ist ein Vielzweckaktor bekannt.

Aus der DE 10 2014 007 818 A1 ist eine Antriebseinheit für die Fördertechnik bekannt.

Aus der DE 10 2004 054 601 A1 ist ein Kompaktantrieb bekannt.

Aus der WO 01/71220 A1 ist als nächstliegender Stand der Technik ein Getriebebaukasten bekannt.

Aus der EP 3 208 493 A1 ist eine Antriebsvorrichtung bekannt.

Aus der JP 2005 233055 A ist eine Pitchwinkelsteuerung für Windmühlen bekannt.

Aus der WO 2007/089039 A1 ist ein Winkelgetriebe bekannt.

Aus der EP 3 165 796 A1 ist ein Getriebemotor bekannt.

Der Erfindung liegt daher die Aufgabe zugrunde, einen Getriebemotor weiterzubilden, wobei eine hohe Standzeit erreicht werden soll.

Erfindungsgemäß wird die Aufgabe bei dem Getriebemotor nach den in Anspruch 1 angegebenen Merkmalen gelöst.

Dabei bedeutet ein echtes Überlappen, dass die zugehörige Schnittmenge der Bereiche nicht nur einen einzigen Punkt, insbesondere Berührpunkt, aufweist, sondern einen Teilbereich, insbesondere mathematisch gesehen unendlich viele Punkte.

Dabei ist die radiale Richtung auf die Drehachse des Zahnrads bezogen, so dass die axiale Richtung parallel zu dieser Drehachse ausgerichtet ist und die Umfangsrichtung der Umfangswinkel um diese Drehachse ist. Radialabstände sind also Abstände zu dieser Drehachse.

Von Vorteil ist dabei, dass der Eingriffsbereich radial weiter nach außen reicht als der Berührbereich. Somit ist zwar in diesem radial äußeren Bereich das Aufsteckritzel weniger tragfähig, aber die Ritzelzapfensicherheit sowie die Überdeckung ist verbessert. Das Aufsteckritzel weist also eine kragen- und/oder glockenförmige Verlängerung auf, die nach radial außen den Eingriffsbereich verlängert. Die insbesondere bezogen auf die Drehachse des Zahnrads in Drehachsrichtung des Zahnrads gemessene Wandstärke dieser Verlängerung nimmt mit zunehmendem Radialabstand monoton ab. Dies ermöglicht eine immer größere Überdeckung, insbesondere je größer der Achsabstand zwischen der Drehachse des Zahnrads und der Drehachse der Welle ist. Außerdem ist eine erhöhte Elastizität des Aufsteckritzels im von der Verlängerung radial überdeckten Radialabstandsbereichs erreicht und somit sind Stöße, insbesondere auch Eintrittstöße, beim Betrieb des Getriebes abfederbar und die Abnutzung der Verzahnung und/oder Ritzelverzahnung verminderbar, also eine hohe Standzeit erreichbar.

Bei einer vorteilhaften Ausgestaltung ist die Drehachse des Zahnrads von der Drehachse der Welle beabstandet, also ein nicht verschwindender Achsversatz beim aus Zahnrad und Aufsteckritzel gebildeten Getriebes vorhanden ist. Von Vorteil ist dabei, dass die aus Zahnrad und vom Motor angetriebenem Ritzel gebildete Getriebestufe eine Spiroplan-, Spiroid- oder Kronenradgetriebestufe ist.

Bei einer vorteilhaften Ausgestaltung überlappt der bezogen auf die Drehachse des Zahnrads von der Verzahnung überdeckte Radialabstandsbereich mit dem von einem zwischen Aufsteckritzel und Welle angeordneten Freiraum bezogen auf die Drehachse des Zahnrads überdeckten Radialabstandsbereich. Von Vorteil ist dabei, dass das Aufsteckritzel verlängert ist mit einem Kragen oder glockenartig verlängert ist. Somit ist trotz geringerer Tragfähigkeit in diesem Bereich der Verlängerung eine bessere Überdeckung erreicht und somit eine höhere Standzeit infolge geringerer Abnutzung erreichbar.

Bei einer vorteilhaften Ausgestaltung grenzt der bezogen auf die Drehachse des Zahnrads von dem Berührbereich überdeckte Radialabstandsbereich an den von einem zwischen Aufsteckritzel und Welle angeordneten Freiraum bezogen auf die Drehachse des Zahnrads überdeckten Radialabstandsbereich. Von Vorteil ist dabei, dass die glockenförmige Verlängerung bei Eintrittstößen wegen ihrer dünnwandigen Wandstärke elastisch abfedert und somit die Abnutzung der Verzahnung reduziert.

Bei einer vorteilhaften Ausgestaltung begrenzen ein innenkonusförmiger Bereich des Aufsteckritzels den Freiraum und ein konkaver rotationskörperförmiger Bereich, insbesondere außenkonusförmiger Bereich, der Welle den Freiraum begrenzen, wobei die Rotationssymmetrieachse des konkaven rotationskörperförmigen Bereichs und des innenkonusförmigen Bereichs jeweils die Drehachse der Welle ist. Von Vorteil ist dabei, dass Wellenstufen verringerbar oder verkleinerbar sind und somit Wellenbruch verringerbar ist.

Bei einer vorteilhaften Ausgestaltung ist die Verzahnung eine Spiroplanverzahnung, eine Spiroidverzahnung oder eine Kronradverzahnung. Von Vorteil ist dabei, dass ein hohes Drehmoment übertragbar ist.

Bei einer vorteilhaften Ausgestaltung weist das Zahnrad einen hohlzylindrischen Grundkörper auf,
wobei die Verzahnung an einer Seite des Zahnrads angeordnet ist,
wobei ein konusförmiger Nabenbereich auf der bezogen auf die Drehachse des Zahnrads axial von der Verzahnung abgewandten Seite des Zahnrads angeformt und/oder angeordnet ist. Von Vorteil ist dabei, dass das Aufsteckritzel weit nach radial innen ragen kann und nicht daran gehindert wird.

Bei einer vorteilhaften Ausgestaltung ist der von der Verzahnung überdeckte Radialabstandsbereich von der Drehachse des Zahnrades beabstandet. Von Vorteil ist dabei, dass eine einfache Herstellung ermöglicht ist.

Bei einer vorteilhaften Ausgestaltung weist ein Antriebssystem einen Umrichter und einen Getriebemotor nach einem der vorher erwähnten Ausführungsformen der Erfindung auf, wobei der Getriebemotor einen vom Umrichter gespeisten Drehstrommotor aufweist, und wobei die Welle des Getriebemotors eine einteilig oder mehrteilig ausgeführte Rotorwelle des umrichtergespeisten Drehstrommotors ist.

Von Vorteil ist dabei, dass die Verzahnung und die Ritzelverzahnung eine hohe Standzeit erreichen. Denn der Umrichter weist einen netzgespeisten Gleichrichter auf zur Erzeugung einer unipolaren Spannung, aus der ein pulsweitenmoduliert betriebener Wechselrichter gespeist wird. Daher wird vom Wechselrichter gespeiste Stator mit einem Strom beaufschlagt, der einen höherfrequenten Stromripple, also Stromstärkeschwankungen, aufweist. Dieser Stromripple führt zu entsprechenden Drehzahlschwankungen der Welle, so dass die Verzahnung und Ritzelverzahnung entsprechend belastet werden. Durch die Verlängerung ist aber eine erhöhte Ritzelzapfensicherheit Überdeckung erreicht. Insbesondere ist dabei auch der Randbereich der Verzahnung und im eingriff stehenden Bereich der Ritzelverzahnung widerstandsfähiger gegen die mit den Drehzahlschwankungen einhergehenden Stoßbelastungen.

Die Erfindung wird nun anhand von schematischen Abbildungen näher erläutert:
In der Figur 1 ist ein Querschnitt durch eine eintreibende Stufe eines erfindungsgemäßen Getriebemotors schematisch dargestellt.
In der Figur 2 ist ein Querschnitt durch eine eintreibende Stufe eines nicht unter den Schutzumfang des Anspruchs fallenden Getriebemotors schematisch dargestellt.

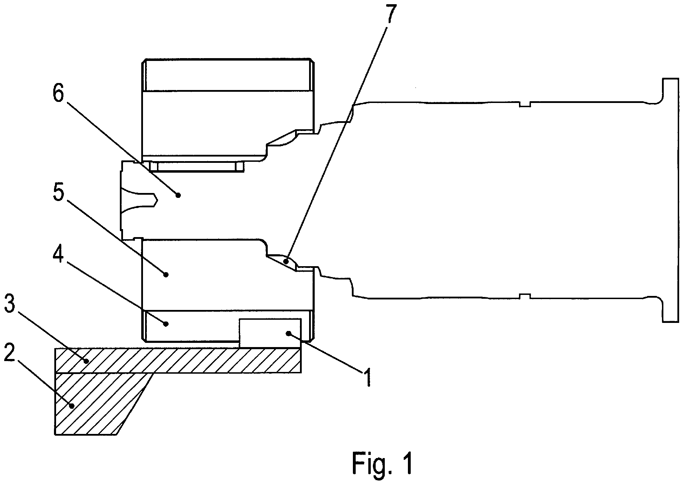

Wie in Figur 1 dargestellt, weist der Getriebemotor eine Welle 6, insbesondere Rotorwelle des Elektromotors des Getriebemotors, auf. Diese Welle 6 ist bevorzugt mehrteilig aufgebaut.

Auf einen axialen Endbereich der Welle 6 ist ein Aufsteckritzel 5 aufgesteckt, welches eine als Außenverzahnung ausgeführte Ritzelverzahnung 4 aufweist. Das Aufsteckritzel 5 ist mit der Welle 6 drehfest verbunden, insbesondere formschlüssig, insbesondere mittels einer Passfederverbindung.

Die Ritzelverzahnung ist im Eingriff mit der Verzahnung 1 eines Zahnrads (1, 2, 3), dessen Drehachse senkrecht zur Drehachse der Welle 6 ausgerichtet ist. Außerdem ist die Drehachse des Zahnrads (1, 2, 3) beabstandet von der Drehachse der Welle 6.

Die Verzahnung 1 des Zahnrads (1, 2, 3) ist als Planverzahnung 1 ausgeführt, insbesondere als Spiroplanverzahnung, Spiroidverzahnung oder als Kronenradverzahnung.

Das Zahnrad (1, 2, 3) weist einen hohlzylindrischen Grundkörper auf, an dessen dem Aufsteckritzel 5 zugewandter Seite die Verzahnung 1 angeordnet ist. Dabei überdeckt die Verzahnung 1 bezogen auf die Drehachse des Zahnrads (1, 2, 3) einen ersten Radialabstandsbereich, welcher in einem zweiten, von der Ritzelverzahnung 4 überdeckten Radialabstandsbereich enthalten ist. Dieser zweite Radialabstandsbereich ist also von der Verzahnung 1 ausgesehen, insbesondere also bezogen auf die Drehachse des Zahnrads (1, 2, 3), sowohl nach radial innen als auch nach radial außen weiter ausgedehnt als der erste Radialabstandsbereich.

Somit wird eine hohe Ritzelzapfensicherheit und auch Überdeckung erreicht.

Allerdings weist das Aufsteckritzel 5 in dem bezogen auf die Drehachse des Aufsteckritzels 5 radial äußeren Bereich nicht dieselbe Tragfähigkeit auf als in dem radial inneren Bereich. Denn das Aufsteckritzel 6 berührt die Welle 6 nur in einem bezogen auf die Drehachse des Aufsteckritzels 5 radial weiter innenliegenden Bereich.

Die Welle 6 nimmt das Aufsteckritzel 5 in einem Berührbereich auf, welcher bezogen auf die Drehachse des Zahnrads (1, 2, 3) nur bis zu einem höchsten Radialabstand reicht. Bezogen auf die Drehachse des Zahnrads (1, 2, 3) ist dieser Radialabstand ist innerhalb des von der Verzahnung 1 überdeckten ersten Radialabstandsbereich angeordnet, insbesondere und somit auch innerhalb des zweiten Radialabstandsbereichs.

Bezogen auf die Drehachse des Zahnrads (1, 2, 3) radial oberhalb dieses höchsten Radialabstands liegt keine Berührung mehr zwischen Aufsteckritzel 5 und Welle 6 vor, obwohl das Aufsteckritzel insgesamt auch größere Radialabstände überdeckt, insbesondere also Radialabstände oberhalb des höchsten Radialabstands.

Somit ist oberhalb des bezogen auf die Drehachse des Zahnrads (1, 2, 3) höchsten Radialabstands des Berührbereichs zwischen Aufsteckritzel 5 und Welle 6 ein Freiraum 7 gebildet, der in die Umgebung mündet.

Der bezogen auf die Drehachse des Zahnrads (1, 2, 3) vom Freiraum 7 überdeckte Radialabstandsbereich überlappt mit dem von der Ritzelverzahnung 4 überdeckten Radialabstandsbereich.

Wie in Figur 1 gezeigt, ist der Freiraum 7 bezogen auf die Drehachse des Zahnrads (1, 2, 3) axial einerseits durch das Aufsteckritzel 5 begrenzt und andererseits durch die Welle 6. Dabei ist die Welle 6 in diesem Bereich als konkaver Rotationskörperabschnitt geformt und das Aufsteckritzel 5 weist in diesem Bereich einen innenkonusförmigen Abschnitt auf, an welchen sich ein innenzylindrischer Abschnitt anschließt. Dabei ist der konkave Rotationskörperabschnitt näher zur Drehachse des Zahnrads (1, 2, 3) angeordnet als der innenzylindrische Abschnitt.

Insbesondere ist er also bezogen auf die Drehachse des Zahnrads (1, 2, 3) radial weiter innen angeordnet.

Die Rotationssymmetrieachse des konkaven Rotationskörperabschnitts und des innenkonusförmigen Abschnitts ist parallel zur Drehachse der Welle 6 ausgerichtet.

Die axiale Breite des Freiraums 7 nimmt also mit zunehmendem Radialabstand zunächst monoton, insbesondere nicht streng monoton, zu bis zum Erreichen eines Maximums und nimmt dann monoton, insbesondere nicht streng monoton, wieder ab, bis sie einen nichtverschwindenden Wert an der Mündung zur Umgebung hinaufweist.

An der Welle 6 schließt sich an den konkaven Rotationskörperabschnitt ein zylindrischer Abschnitt, insbesondere außenzylindrischer Abschnitt, an, welcher bezogen auf die Drehachse des Zahnrads (1, 2, 3) radial überlappt mit dem innenzylindrischen Abschnitt des Zahnrads (1, 2, 3).

Bei weiteren erfindungsgemäßen Ausführungsbeispielen ist der Freiraum 7 derart geformt, dass sich der zylindrische Abschnitt der Welle 6 mit dem innenzylindrischen Abschnitt des Aufsteckritzels 5, insbesondere so dass eine verbesserte Abstützung und Tragfähigkeit erreichbar ist.

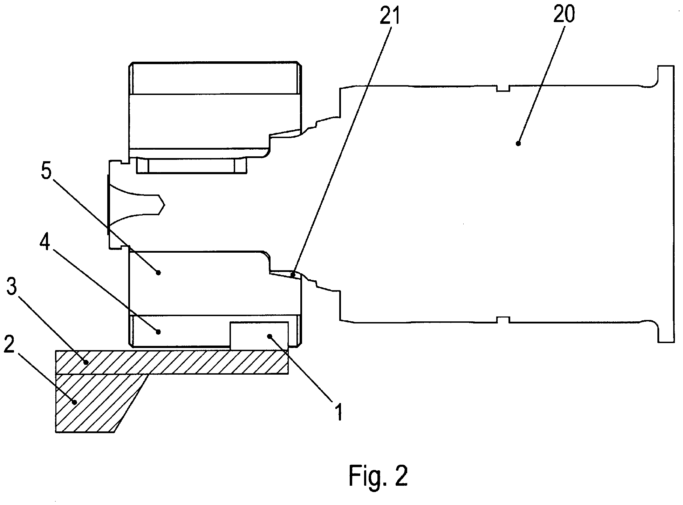

In dem nicht unter den Schutzumfang des Anspruchs fallenden Ausführungsbeispiel nach Figur 2 ist im Unterschied zur Figur 1 der Freiraum 21 durch einen zylindrischen Bereich der Welle 20 begrenzt anstatt durch einen konischen. In dem von diesem zylindrischen Beriech bezogen auf die Drehachse des Zahnrads (1, 2, 3) überdeckten Radialabstandsbereich weist das Aufsteckritzel 5 eine innenkonusförmigen Beriech auf, so dass die in axialer Richtung, also parallel zur Drehachse des Zahnrads (1, 2, 3) gemessene lichte Weite des Freiraums 21 in radialer Richtung zunächst streng monoton zunimmt und danach streng monoton abnimmt infolge eines an den zylindrischen Beriech der Welle 6 angrenzenden konkaven Rotationskörperabschnitts an der Welle 6.

Bei weiteren erfindungsgemäßen Ausführungsbeispielen ist die Welle 6 nicht mehrteilig, sondern einteilig aufgebaut.

### Bezugszeichenliste

1 Verzahnung
2 Nabenbereich
3 Grundkörper
4 Ritzelverzahnung
5 Aufsteckritzel
6 Welle, insbesondere mehrteilig ausgeführte Welle
7 Freiraum, Beabstandungsbereich
20 Welle
21 Freiraum, Beabstandungsbereich

## Patentansprüche

1. Getriebemotor,
aufweisend ein Aufsteckritzel (5), eine Welle (6, 20) und ein Zahnrad (1, 2, 3),
wobei das Aufsteckritzel (5) mit der Welle (6, 20) formschlüssig verbunden ist,
wobei eine Ritzelverzahnung (4) des Aufsteckritzels (5) mit einer Verzahnung (1) des Zahnrads (1, 2, 3) im Eingriff ist,
wobei die Drehachse des Zahnrads (1, 2, 3) senkrecht zur Drehachse der Welle (6, 20) ausgerichtet ist,
wobei der Berührbereich zwischen Aufsteckritzel (5) und Welle (6) in bezogen auf die Drehachse des Zahnrades (1, 2, 3) radialer Richtung, insbesondere echt, überlappt mit dem Eingriffsbereich der Verzahnung (1) in die Ritzelverzahnung (4),
und/oder wobei
der vom Berührbereich zwischen Aufsteckritzel (5) und Welle (6) bezogen auf die Drehachse des Zahnrads (1, 2, 3) überdeckte Radialabstandsbereich derart überlappt mit dem von der Verzahnung (1) überdeckten Radialabstandsbereich, dass der größte Radialabstand des Berührbereichs kleiner ist als der größte Radialabstand der Verzahnung (1),
wobei ein Freiraum (7, 21) zwischen Aufsteckritzel (5) und Welle (6, 20) in bezogen auf die Drehachse des Zahnrads (1, 2, 3) radialer Richtung überlappt mit der Verzahnung (1),
wobei der Freiraum (7, 21) an dem vom Zahnrad (1, 2, 3) abgewandten Endbereich des Aufsteckritzels (5) in die Umgebung mündet,
**dadurch gekennzeichnet, dass**
ein aus einem innenkonusförmigen Bereich und einem daran sich anschließenden zylindrischen Bereich zusammengesetzter Bereich des Aufsteckritzels (5) den Freiraum (7, 21) in axialer Richtung begrenzen und ein aus einem konkaven rotationskörperförmigen Bereich und einem sich daran anschließenden zylindrischen Bereich zusammengesetzter Bereich der Welle (6, 20) den Freiraum (7, 21) entgegen der axialen Richtung begrenzen.

2. Getriebemotor nach Anspruch 1,
**dadurch gekennzeichnet, dass**
die Drehachse des Zahnrads von der Drehachse der Welle (6, 20) beabstandet ist,
also ein nicht verschwindender Achsversatz beim aus Zahnrad und Aufsteckritzel (5) gebildeten Getriebes vorhanden ist.

3. Getriebemotor nach einem der vorangegangenen Ansprüche,
**dadurch gekennzeichnet, dass**
der bezogen auf die Drehachse des Zahnrads von der Verzahnung (1) überdeckte Radialabstandsbereich überlappt mit dem von einem zwischen Aufsteckritzel (5) und Welle (6, 20) angeordneten Freiraum (7, 21) bezogen auf die Drehachse des Zahnrads überdeckten Radialabstandsbereich.

4. Getriebemotor nach einem der vorangegangenen Ansprüche,
**dadurch gekennzeichnet, dass**
der bezogen auf die Drehachse des Zahnrads von dem Berührbereich überdeckte Radialabstandsbereich angrenzt an den von dem zwischen Aufsteckritzel (5) und Welle (6, 20) angeordneten Freiraum (7, 21) bezogen auf die Drehachse des Zahnrads überdeckten Radialabstandsbereich.

5. Getriebemotor nach einem der vorangegangenen Ansprüche,
**dadurch gekennzeichnet, dass**
ein innenkonusförmiger Bereich des Aufsteckritzels (5) den Freiraum (7, 21) und ein konkaver rotationskörperförmiger Bereich der Welle (6, 20) den Freiraum (7, 21) begrenzen,
wobei die Rotationssymmetrieachse des konkaven rotationskörperförmigen Bereichs und des innenkonusförmigen Bereichs jeweils die Drehachse der Welle (6, 20) ist.

6. Getriebemotor nach einem der vorangegangenen Ansprüche,
**dadurch gekennzeichnet, dass**
die Verzahnung (1) eine Spiroplanverzahnung, eine Spiroidverzahnung oder eine Kronradverzahnung ist.

7. Getriebemotor nach einem der vorangegangenen Ansprüche,
**dadurch gekennzeichnet, dass**
das Zahnrad einen hohlzylindrischen Grundkörper (3) aufweist,
wobei die Verzahnung (1) an einer Seite des Zahnrads angeordnet ist,
wobei ein konusförmiger Nabenbereich (2) auf der bezogen auf die Drehachse des Zahnrads axial von der Verzahnung (1) abgewandten Seite des Zahnrads angeformt und/oder angeordnet ist.

8. Getriebemotor nach einem der vorangegangenen Ansprüche,
**dadurch gekennzeichnet, dass**
der von der Verzahnung (1) überdeckte Radialabstandsbereich von der Drehachse des Zahnrades beabstandet ist.

9. Antriebssystem, aufweisend einen Umrichter und einen Getriebemotor nach einem der vorangegangenen Ansprüche,
wobei der Getriebemotor einen vom Umrichter gespeisten Drehstrommotor aufweist,
**dadurch gekennzeichnet, dass**
die Welle (6, 20) eine einteilig oder mehrteilig ausgeführte Rotorwelle des umrichtergespeisten Drehstrommotors ist.

## Claims

1. A geared motor,
having an attachable pinion (5), a shaft (6, 20) and a gear wheel (1, 2, 3),
wherein the attachable pinion (5) is connected to the shaft (6, 20) in a formlocked manner,
wherein a pinion toothing (4) of the attachable pinion (5) meshes with a toothing (1) of the gear wheel (1, 2, 3),
wherein the rotational axis of the gear wheel (1, 2, 3) is oriented perpendicular to the rotational axis of the shaft (6, 20),
wherein the contact region between attachable pinion (5) and shaft (6) overlaps, in particular truly overlaps, in a radial direction related to the rotational axis of the gear wheel (1, 2, 3), with the meshing region of the toothing (1) with the pinion toothing (4),
and/or wherein
the radial clearance region covered by the contact region between attachable pinion (5) and shaft (6) related to the rotational axis of the gear wheel (1, 2, 3) overlaps with the radial clearance region covered by the toothing (1), in such a manner that the greatest radial clearance of the contact region is smaller than the greatest radiance clearance of the toothing (1),
wherein a free space (7, 21) between attachable pinion (5) and shaft (6, 20) overlaps, in a radial direction related to the rotational axis of the gear wheel (1, 2, 3), with the toothing (1)
wherein the free space (7, 21) issues to the surroundings at that end region of the attachable pinion (5) remote from the gear wheel (1, 2, 3),
**characterised in that**
a region of the attachable pinion (5), which region is composed of an inner-cone-shaped region and an adjoining cylindrical region, bounds the free space (7, 21) in an axial direction and a region of the shaft (6, 20), which region is composed of a concave region in the shape of a body of revolution and an adjoining cylindrical region, bounds the free space (7, 21) counter to the axial direction.

2. A geared motor according to claim 1,
**characterised in that**
the rotational axis of the gear wheel is spaced apart from the rotational axis of the shaft (6, 20),
therefore there is a non-vanishing axial offset in the case of the gear unit formed of gear wheel and attachable pinion (5).

3. A geared motor according to any one of the preceding claims,
**characterised in that**
the radial clearance region covered by the toothing (1) related to the rotational axis of the gear wheel overlaps with the radial clearance region covered by a free space (7, 21), arranged between attachable pinion (5) and shaft (6, 20), related to the rotational axis of the gear wheel.

4. A geared motor according to any one of the preceding claims,
**characterised in that**
the radial clearance region covered by the contact region related to the rotational axis of the gear wheel adjoins the radial clearance region covered by the free space (7, 21), arranged between attachable pinion (5) and shaft (6, 20), related to the rotational axis of the gear wheel.

5. A geared motor according to any one of the preceding claims,
**characterised in that**
an inner-cone-shaped region of the attachable pinion (5) bounds the free space (7, 21) and a concave region, in the shape of a body of revolution, of the shaft (6, 20) bounds the free space (7, 21),
wherein the axis of rotational symmetry of the concave region in the shape of a body of revolution and of the inner-cone-shaped region is in each case the rotational axis of the shaft (6, 20).

6. A geared motor according to any one of the preceding claims,
**characterised in that**
the toothing (1) is Spiroplan gearing, spiroid gearing or crown wheel gearing.

7. A geared motor according to any one of the preceding claims,
**characterised in that**
the gear wheel has a hollow-cylindrical basic body (3),
wherein the toothing (1) is arranged on one side of the gear wheel,
wherein a cone-shaped hub region (2) is moulded and/or arranged at that side of the gear wheel axially remote from the toothing (1) related to the rotational axis of the gear wheel.

8. A geared motor according to any one of the preceding claims,
**characterised in that**
the radial clearance region covered by the toothing (1) is spaced apart from the rotational axis of the gear wheel.

9. A drive system having a converter and a geared motor according to any one of the preceding claims, wherein the geared motor has a three-phase motor supplied by the converter,
**characterised in that**
the shaft (6, 20) is a one-part or multi-part rotor shaft of the three-phase motor supplied by the converter.

## Revendications

1. Motoréducteur
comprenant un pignon enfichable (5), un arbre (6, 20) et une roue dentée (1, 2, 3),
le pignon enfichable (5) étant relié à l'arbre (6, 20) par complémentarité de formes, sachant qu'une denture (4) dudit pignon enfichable (5) est en prise avec une denture (1) de la roue dentée (1, 2, 3),
l'axe de rotation de ladite roue dentée (1, 2, 3) étant orienté perpendiculairement à l'axe de rotation dudit arbre (6, 20),
sachant que la zone de contact entre le pignon enfichable (5) et l'arbre (6) est en chevauchement dans la direction radiale notamment effective, par rapport à l'axe de rotation de la roue dentée (1, 2, 3), avec la zone d'engrènement de la denture (1) dans la denture (4) du pignon,
et/ou sachant que
la zone d'espacement radial couverte par ladite zone de contact entre le pignon enfichable (5) et l'arbre (6), par rapport audit axe de rotation de la roue dentée (1, 2, 3), est en chevauchement avec la zone d'espacement radial couverte par la denture (1), de façon telle que la distance radiale maximale de ladite zone de contact soit moindre que la distance radiale maximale de ladite denture (1),
sachant qu'un espace libre (7, 21), entre le pignon enfichable (5) et l'arbre (6, 20), est en chevauchement avec ladite denture (1) dans la direction radiale par rapport audit axe de rotation de la roue dentée (1, 2, 3),
lequel espace libre (7, 21) débouche dans l'espace environnant au niveau de la région extrême du pignon enfichable (5) qui est tournée à l'opposé de ladite roue dentée (1, 2, 3), **caractérisé par le fait**
**qu'**une région du pignon enfichable (5), constituée d'une zone en forme de cône intérieur et d'une zone cylindrique attenante à cette dernière, délimite l'espace libre (7, 21) dans la direction axiale et une région de l'arbre (6, 20), constituée d'une zone en forme de corps concave de révolution et d'une zone cylindrique attenante à cette dernière, délimite ledit espace libre (7, 21) en sens inverse de ladite direction axiale.

2. Motoréducteur selon la revendication 1,
**caractérisé par le fait que**
l'axe de rotation de la roue dentée se trouve à distance de l'axe de rotation de l'arbre (6, 20),
c'est-à-dire que l'engrenage, constitué de ladite roue dentée et du pignon enfichable (5), est le siège d'un décalage non évanescent entre les axes.

3. Motoréducteur selon l'une des revendications précédentes,
**caractérisé par le fait que**
la zone d'espacement radial couverte par la denture (1), par rapport à l'axe de rotation de la roue dentée, est en chevauchement avec la zone d'espacement radial couverte par un espace libre (7, 21), entre le pignon enfichable (5) et l'arbre (6, 20), par rapport audit axe de rotation de la roue dentée.

4. Motoréducteur selon l'une des revendications précédentes,
**caractérisé par le fait que**
la zone d'espacement radial couverte par la zone de contact, par rapport à l'axe de rotation de la roue dentée, est limitrophe de la zone d'espacement radial couverte par l'espace libre (7, 21), entre le pignon enfichable (5) et l'arbre (6, 20), par rapport audit axe de rotation de la roue dentée.

5. Motoréducteur selon l'une des revendications précédentes,
**caractérisé par le fait**
**qu'**une zone du pignon enfichable (5), en forme de cône intérieur, délimite l'espace libre (7, 21) et une zone de l'arbre (6, 20), en forme de corps concave de révolution, délimite ledit espace libre (7, 21),
l'axe de symétrie rotatoire de ladite zone en forme de corps concave de révolution et de ladite zone en forme de cône intérieur matérialisant, à chaque fois, l'axe de rotation dudit arbre (6, 20).

6. Motoréducteur selon l'une des revendications précédentes,
**caractérisé par le fait que**
la denture (1) est une denture Spiroplan, une denture spiroïdale ou une denture de couronne.

7. Motoréducteur selon l'une des revendications précédentes,
**caractérisé par le fait que**
la roue dentée est pourvue d'un corps de base (3) cylindrique creux,
la denture (1) étant située d'un côté de ladite roue dentée,
une zone conique de moyeu (2) étant façonnée et/ou disposée du côté de la roue dentée qui est tourné axialement à l'opposé de ladite denture (1) par rapport à l'axe de rotation de ladite roue dentée.

8. Motoréducteur selon l'une des revendications précédentes,
**caractérisé par le fait que**
la zone d'espacement radial couverte par la denture (1) se trouve à distance de l'axe de rotation de la roue dentée.

9. Système d'entraînement muni d'un convertisseur et d'un motoréducteur conforme à l'une des revendications précédentes,
lequel motoréducteur est doté d'un moteur à courant triphasé alimenté par ledit convertisseur,
**caractérisé par le fait que**
l'arbre (6, 20) est un arbre rotorique, réalisé en une ou plusieurs partie(s), du moteur à courant triphasé alimenté par le convertisseur.
